# EUROPÄISCHE PATENTSCHRIFT

(11) **EP 1 022 468 B1**
(45) Veröffentlichungstag und Bekanntmachung des Hinweises auf die Patenterteilung: **27.07.2005**
(21) Anmeldenummer: 99121624.3
(22) Anmeldetag: 30.10.1999
(51) Int. Cl.: F04B 53/16, F04B 53/20, F04B 1/04

(54) **Kolbenpumpe**
Piston pump
Pompe à piston

(30) Priorität: 20.01.1999 DE 19902019
(43) Veröffentlichungstag der Anmeldung: 26.07.2000
(73) Patentinhaber: ROBERT BOSCH GMBH, 70442 Stuttgart (DE)
(72) Erfinder: Schuller, Wolfgang, 74343 Sachsenheim (DE); Duermeier, Thorsten, 71665 Vaihingen/Enz (DE)

(56) Entgegenhaltungen:
- DE-A- 4 107 979
- DE-A- 4 316 986
- DE-A- 4 407 978

## Beschreibung

### Stand der Technik

Die Erfindung betrifft eine Kolbenpumpe nach der Gattung des Hauptanspruchs.

Es ist eine Vielzahl derartiger Kolbenpumpen bekannt. Beispielhaft genannt seien die aus der DE 41 07 979 A1 und aus der DE 44 07 978 A1 bekannten Kolbenpumpen. Die bekannten Kolbenpumpen weisen einen Kolben auf, der in einer Laufbuchse axial verschieblich geführt ist. Zum Antrieb des Kolbens zu einer hin- und hergehenden Hubbewegung dient ein elektromotorisch rotierend antreibbarer Exzenter, der den Kolben an einer aus der Laufbuchse vorstehenden Stirnseite beaufschlagt. Die Laufbuchse ist in eine Zylinderbohrung eines Pumpengehäuses eingesetzt.

### Vorteile der Erfindung

Die erfindungsgemäße Kolbenpumpe mit den Merkmalen des Anspruchs 1 weist ein rohrförmiges Filter auf, das an der Laufbuchse angebracht ist und das den Kolben umschließt. Das Filter filtert von der Kolbenpumpe angesaugtes Fluid und schützt dadurch die Kolbenpumpe. Das Filter ist platzsparend untergebracht. Seine Anbringung an der Laufbuchse hat den Vorteil einer einfachen Filtermontage, das Filter wird zusammen mit der Laufbuchse in das Pumpengehäuse eingesetzt.

Das Filter der erfindungsgemäßen Kolbenpumpe weist ein Führungselement sowie ein Dichtelement für den Kolben auf. Dies hat den Vorteil, daß keine separaten Führungs- oder Dichtungsbauteile notwendig sind, was den Herstellungs- und Lagerhaltungsaufwand reduziert, die Anzahl der notwendigen Montageschritte beim Zusammenbau der Kolbenpumpe verringert und Montagefehler vermeidet.

Die Unteransprüche haben vorteilhafte Ausgestaltungen und Weiterbildungen der im Hauptanspruch angegebenen Erfindung zum Gegenstand.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines bevorzugt ausgewählten, in der Zeichnung dargestellten Ausführungsbeispiels näher erläutert. Es zeigen
- Figur 1: eine erfindungsgemäße Kolbenpumpe im Achsschnitt; und
- Figur 2: ein Filter der Kolbenpumpe aus Figur 1 in größerem Maßstab im Achsschnitt.

### Beschreibung des Ausführungsbeispiels

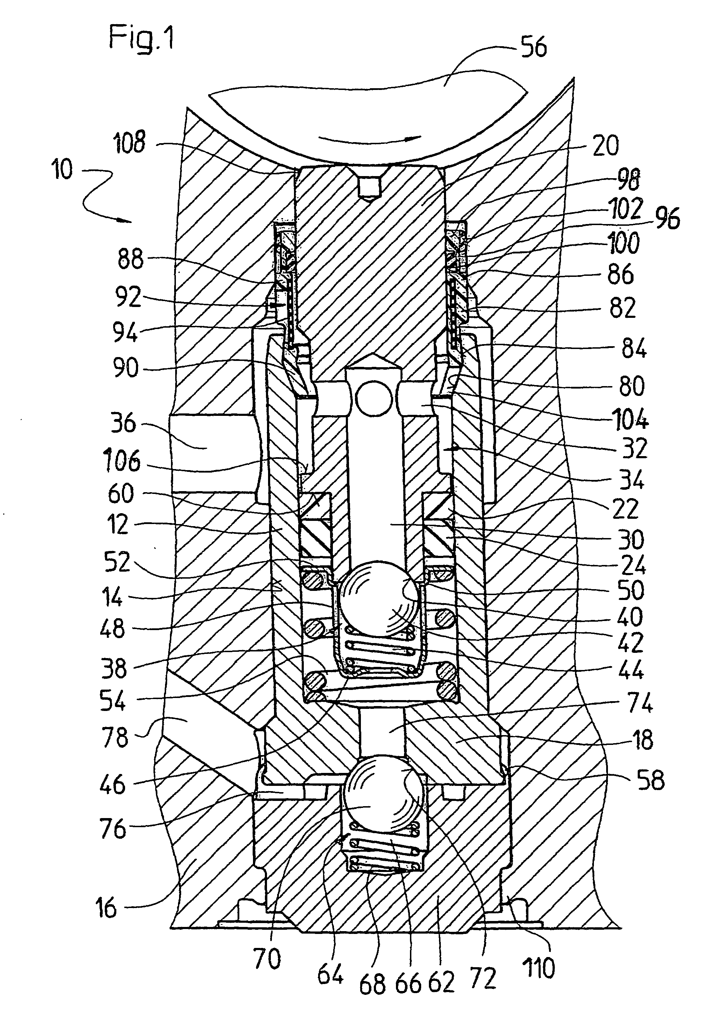

Die in Figur 1 dargestellte insgesamt mit 10 bezeichnete erfindungsgemäße Kolbenpumpe weist eine Laufbuchse 12 auf, die in eine gestufte Zylinderbohrung 14 eines Hydraulikblocks eingesetzt ist, der ein Pumpengehäuse 16 bildet. Die Laufbuchse 12 weist einen mit ihr einstückigen Laufbuchsenboden 18 auf. Der Hydraulikblock, von dem in der Zeichnung der klaren Darstellbarkeit wegen lediglich ein die Kolbenpumpe 10 umgebendes Bruchstück dargestellt ist, ist Teil einer schlupfgeregelten, im übrigen nicht dargestellten, hydraulischen Fahrzeugbremsanlage. In ihm sind außer der Kolbenpumpe 10 weitere, nicht dargestellte hydraulische Bauelemente wie Magnetventile und Hydrospeicher eingesetzt und hydraulisch miteinander verschaltet. Der Hydraulikblock ist an einen nicht dargestellten Hauptbremszylinder angeschlossen und an den Hydraulikblock sind nicht dargestellte Radbremszylinder angeschlossen.

In der Laufbuchse 12 ist ein bolzenförmiger Kolben 20 über etwa die Hälfte seiner Länge aufgenommen. Ein in der Laufbuchse 12 befindliches Ende des Kolbens 20 ist mit einem Führungsring 22 an der Innenoberfläche der Laufbuchse 12 axial verschieblich geführt und mit einem Dichtring 24 abgedichtet.

Zum Fluideinlaß ist der Kolben 20 mit einer axialen Sackbohrung 30 von seinem in der Laufbuchse 12 befindlichen Ende her versehen, die nahe ihres Grundes von Querbohrungen 32 gekreuzt wird. Ein Nenndurchmesser des Kolbens 20 entspricht einem Innendurchmesser der Laufbuchse 12, wobei eine Spielpassung zwischen Kolben 20 und Laufbuchse 12 besteht, d. h. der Kolben 20 weist in Bezug auf die Laufbuchse 12 ein Untermaß auf, das die Axialverschiebbarkeit des Kolbens 20 gewährleistet. Sackbohrung 30 und Querbohrungen 32 kommunizieren durch eine breite Nut 34 im Umfang des Kolbens 20 und eine offene Stirnseite der Laufbuchse 12 mit einer Einlaßbohrung 36, die radial zur Kolbenpumpe 12 in die Zylinderbohrung 14 mündet.

Als Einlaßventil 38 weist die erfindungsgemäße Kolbenpumpe 10 ein federbelastetes Rückschlagventil auf, welches an dem in der Laufbuchse 12 befindlichen Ende des Kolbens 20 angebracht ist: Eine Mündung der Sackbohrung 30 ist als konischer Ventilsitz 40 ausgebildet, gegen den eine Ventilkugel 42 als Ventilschließkörper von einer Schraubendruckfeder als Ventilschließfeder 44 gedrückt wird. Die Ventilschließfeder 44 stützt sich gegen einen Boden eines topfförmigen Ventilkäfigs 46 ab, der als Tiefziehteil aus Blech hergestellt ist und Durchlässe 48 aufweist. An seiner offenen Seite weist der Ventilkäfig 46 eine umlaufende Ringstufe 50, mit der er an der in der Laufbuchse 12 befindlichen Stirnseite des Kolbens 20 anliegt, und einen Radialflansch 52 auf, an dem er von einer Kolbenrückstellfeder 54 gegen die Stirnseite des Kolbens 20 gedrückt wird. Ventilkugel 42 und Ventilschließfeder 44 sind im Ventilkäfig 46 aufgenommen. Die Kolbenrückstellfeder 54, die sich gegen den Laufbuchsenboden 18 abstützt, ist stärker ausgebildet als die Ventilschließfeder 44, so daß sie den Ventilkäfig 46 bei allen beim Betrieb der Kolbenpumpe 10 auftretenden Belastungen sicher an der Stirnseite des Kolbens 20 hält.

Zum Antrieb des Kolbens 20 zu einer in axialer Richtung hin- und hergehenden Hubbewegung weist die erfindungsgemäße Kolbenpumpe 10 einen elektromotorisch rotierend antreibbaren Exzenter 56 auf, gegen dessen Umfang der Kolben 20 von der Kolbenrückstellfeder 54 gedrückt wird.

Der in der Laufbuchse 12 befindliche Führungsring 22 und Dichtring 24 sind in axialer Richtung zwischen dem Radialflansch 52 des Ventilkäfigs 46 und einer Ringstufe 60 des Kolbens 20 auf dem Kolben 20 fixiert. Ein Abstand der Ringstufe 60 vom Radialflansch 52 sind so bemessen, daß der Führungsrings 22 und der Dichtring 24 nicht gestaucht werden.

Auf den Laufbuchsenboden 18 ist ein zylindrisches Verschlußelement 62 aufgesetzt und mit einem Bördel 58 mit der Laufbuchse 12 verbunden. Das Verschlußelement 62 dient zum druckdichten Verschließen der Zylinderbohrung 14 und zum Fixieren der Laufbuchse 12 im Pumpengehäuse 16. Im Verschlußelement 62 ist ein Auslaßventil 64 in Form eines federbelasteten Rückschlagventils untergebracht: Das Verschlußelement 62 weist eine koaxiale Sackbohrung 66 auf, in die eine Schraubendruckfeder als Ventilschließfeder 68 und eine Ventilkugel 70 als Ventilschließkörper eingesetzt sind. Die Ventilkugel 70 wirkt zusammen mit einem konischen Ventilsitz 72, welcher an einer Mündung einer Mittelbohrung 74 angebracht ist, die den Laufbuchsenboden 18 axial durchsetzt. Der Ventilsitz 72 ist durch Prägen geformt und verfestigt. Ein Auslaß des Fluids erfolgt durch Radialkanäle 76 zwischen dem Laufbuchsenboden 18 und dem Verschlußelement 62 in eine radiale Auslaßbohrung 78 im Pumpengehäuse 16.

An einem offenen Ende ist die Laufbuchse 12 mit einer flachen, V-förmigen Nut 80 auf ihrer Innenseite versehen. In diese V-förmige Nut 80 ist ein rohrförmiges Filter 82 eingeschnappt, welches im Bereich der V-förmigen Nut 80 einen umlaufenden Wulst 84 aufweist, welcher eine zur V-förmigen Nut 80 der Laufbuchse 12 komplementäre V-Form hat. Der V-förmige Wulst 84 des Filters 82 und die V-förmige Nut 80 der Laufbuchse 12 bilden eine Schnappverbindung.

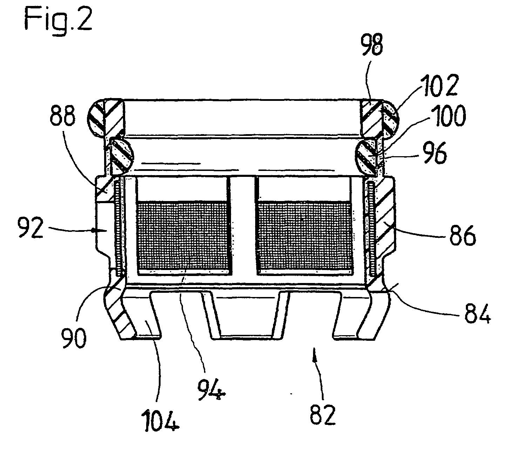

Das Filter 82 weist ein Filtergerüst mit achsparallel verlaufenden Filterstegen 86 auf, die an ihren Enden einstückig mit zwei Filterringen 88, 90 sind (Figur 2). Das Filtergerüst mit den Filterstegen 86 und den Filterringen 88, 90 ist ein Spritzgießteil aus Kunststoff. Die Filterstege 86 und die Filterringe 88, 90 umrahmen Filterfenster 92, in die ein Metall-Filtergewebe 94 eingesetzt ist. Das Filtergewebe 94 ist schlauchförmig, es ist mit dem Filtergerüst 86, 88, 90 umspritzt.

Einer der beiden Filterringe 90 weist den V-förmigen Wulst 84 auf, welcher in der V-förmigen Nut 80 in der Laufbuchse 12 einliegt. Die Filterstege 86 stehen die Laufbuchse 12 axial verlängernd von der Laufbuchse 12 ab. Der andere Filterring 88 wird mit axialem Abstand von der Laufbuchse 12 von den Filterstegen 86 an der Laufbuchse 12 gehalten. Von diesem Filterring 88 steht ein hohlzylindrischer, dünnwandiger Kragen 96 koaxial ab, der mit dem Filtergerüst 86, 88, 90 einstückig ist. Der Kragen 96 befindet sich in einem Zwischenraum zwischen dem Kolben 20 und der Zylinderbohrung 14. Der Kragen 96 verdickt sich an seinem freien Ende zu einem mit ihm einstückigen Führungsring 98, der den Kolben 20 axialverschieblich in der Zylinderbohrung 14 im Pumpengehäuse 16 führt. Ein separater Führungsring ist daher an dem aus der Laufbuchse 12 vorstehenden Ende nicht erforderlich.

Zwischen dem Führungsring 98 und dem ihm zugewandten Filterring 88 weist das Filter 82 einen Dichtring 100 auf, der am Kolben 20 anliegt und an dem aus der Laufbuchse 12 vorstehenden Ende des Kolbens 20 abdichtet. Der Dichtring 100 ist im sog. Zweikomponenentenverfahren hergestellt, er ist nach dem Spritzgießen des Filtergerüsts 86, 88, 90 an dessen Kragen 98 angespritzt und dadurch einstückig mit dem Filter 82. Dadurch daß der Dichtring 100 an das Filter 82 angespritzt ist, kann der Dichtring 100 aus einem anderen Werkstoff als das Filtergerüst 86, 88, 90 hergestellt sein. Wird das Filtergerüst 86, 88, 90 aus einem Werkstoff gespritzt, der auch als Dichtungswerkstoff verwendbar ist, kann der Dichtring 100, ebenso wie der Führungsring 98, aus demselben Werkstoff wie das Filtergerüst 86, 88, 90 und in einem Spritzvorgang gemeinsam mit dem Filtergerüst 86, 88, 90 hergestellt sein (nicht dargestellt). Auch ist es denkbar, den Führungsring 98 aus einem anderen Werkstoff wie das Filtergerüst 86, 88, 90 im Zweikomponenentenverfahren an dieses anzuspritzen. Durch das Anspritzen des Dichtrings 100 an das Filter 82 erübrigt sich ein separater Dichtring an dem aus der Laufbuchse 12 vorstehenden Ende des Kolbens 20. Desweiteren wird durch die Anordnung des Dichtrings 100 am Filter 82 eine Beschädigung des Dichtrings 100 bei der Montage der Kolbenpumpe 10 vermieden.

Dieser Filterring 98 des Filters 82 bildet eine Führung, die den Kolben 20 koaxial in der Laufbuchse 12 ausrichtet, bis diese in die Zylinderbohrung 14 des Pumpengehäuses 16 eingesetzt ist. Der Führungsring 98 vereinfacht dadurch die Montage der erfindungsgemäßen Kolbenpumpe 10. Bei in das Pumpengehäuse 16 eingesetzter Laufbuchse 12 wird der Kolben 20 vom Führungsring 98 des Filters 82 axial verschieblich in der Zylinderbohrung 14 im Pumpengehäuse 16 geführt.

Der Filterring 90 mit dem V-förmigen Wulst 84 liegt abdichtend in der V-förmigen Nut 80 der Laufbuchse 12 ein, so daß kein von der Kolbenpumpe 10 angesaugtes Fluid ungefiltert in die Laufbuchse 12 gelangen kann. Außen am Kragen 96 des Filters 82 ist in Höhe des Führungsrings 100 ein zweiter Dichtring 102 angespritzt, der abdichtend an der Zylinderbohrung 14 des Pumpengehäuses 16 anliegt. Dies stellt sicher, daß alles in die Kolbenpumpe 10 einströmende Fluid durch die Filterfenster 92 strömt und dadurch gefiltert wird, bevor es in die Laufbuchse 12 gelangt. Es wird verhindert, daß Fluid ungefiltert in die Kolbenpumpe 10 strömen kann.

Das Filter 82 bildet zugleich eine Verliersicherung des Kolbens 20 in der Laufbuchse 12: Von dem in der V-förmigen Nut der Laufbuchse 12 einliegenden Filterring 90 stehen Federzungen 104 in etwa auf einer gedachten Konusfläche schräg nach innen in die Laufbuchse 12 hinein ab. Die Federzungen 104 haben Abstand in Umfangsrichtung voneinander. Die Federzungen 104 sind einstückig mit dem Filterring 90. Die Federzungen 104, welche die Verliersicherung für den Kolben 20 bilden, ragen in die Nut 34 im Kolben 20 hinein, d. h. freie, dem Laufbuchsenboden 18 zugewandte Enden der Federzungen 104 befinden sich radial innerhalb einer gedachten Kolbenmantelfläche.

Eine Nutflanke 106 der Nut 34 im Kolben 20 bildet eine Hinterschneidung, die mit den Federzungen 104 zusammenwirkt: Bis zum Einsetzen der Laufbuchse 12 in die Zylinderbohrung 14 des Pumpengehäuses 16 drückt die Kolbenrückstellfeder 54 den Kolben 20 mit seiner die Hinterschneidung bildenden Nutflanke 106 in Anlage an die Federzungen 104, die die Nutflanke 106 hintergreifen. Auf diese Weise halten die Federzungen 104 den Kolben 20 gegen die Kraft der Rückstellfeder 54 in der Laufbuchse 12, der Kolben 20 läßt sich nicht aus der Laufbuchse 12 herausziehen.

Zum Zusammenbau der erfindungsgemäßen Kolbenpumpe 10 wird das die Verliersicherung bildende sowie den Führungsring 98 und den Dichtring 100 aufweisende Filter 82 auf den Kolben 20 aufgeschoben, bis die Federzungen 104 in die Nut 34 des Kolbens 20 hinein federn. Dies bedeutet, die Federzungen 104 der Verliersicherung hintergreifen die Nutflanke 106 der Nut 34 des Kolbens 20. Zum Aufsetzen des Filters 82 ist der Kolben 20 an seiner dem Exzenter 56 zugewandten Stirnseite mit einer Fase 108 versehen, die die Federzungen 104 beim Aufschieben des die Verliersicherung bildenden Filters 82 auf den Kolben 20 auseinanderspreizt.

Der Kolben 20 mit dem aufgeschobenen Filter 82 wird zusammen mit dem auf den Kolben 20 aufgeschobenen Führungsring 22 und Dichtring 24, dem am Stirnende des Kolbens 20 angesetzten Einlaßventil 38 und der Kolbenrückstellfeder 54 in die Laufbuchse 12 eingeführt. Dabei gelangen die schräg nach innen stehenden Federzungen 104 des Filters 82 in eine Mündung der Laufbuchse 12 und werden radial zusammengedrückt. Über die Federzungen 104 wird auch der Filterring 90 mit dem V-förmigen Wulst 84 elastisch radial zusammengedrückt. Für das Zusammendrücken der Federzungen 104 und des Filterrings 90 bietet die Nut 34 im Kolben 20 Freiraum radial nach innen. Aufgrund seiner Elastizität weitet sich der Filterring 90 bei Erreichen der V-förmigen Nut 80 in der Laufbuchse 12 wieder auf und ist nach Art einer Schnappverbindung in der Laufbuchse 12 gehalten und sichert seinerseits den Kolben 20 gegen die Kraft der Kolbenrückstellfeder 54 in der Laufbuchse 12.

Nach dem Anbringen des Verschlußelements 62 mit dem in das Verschlußelement 62 eingesetzten Auslaßventil 64 am Laufbuchsenboden 18 mittels des Bördels 58 wird die komplette Vormontagebaugruppe mit der Laufbuchse 12, dem verliersicher in sie eingesetzten Kolben 20 und dem Verschlußelement 62 in die Zylinderbohrung 14 des Pumpengehäuses 16 eingepreßt und durch eine Verstemmung 110 des Pumpengehäuses 16 am Verschlußelement 62 druckdicht im Pumpengehäuse 16 fixiert. Das Anbringen des Verschlußelements 62 an der Laufbuchse 12 kann vor oder nach dem Einsetzen des Kolbens 20 in die Laufbuchse 12 erfolgen.

Zur Klarheit wird angemerkt, daß die in der Zeichnung dargestellten Achsschnitte an einer gedachten Längsmittelachse der Kolbenpumpe 10 bzw. des Filters 82 so abgewinkelt sind, daß der Schnitt in der jeweils linken Bildhälfte durch ein Filterfenster 92 und eine Federzunge 104 hindurchgeht und der Schnitt in der rechten Bildhälfte einen Filtersteg 86 schneidet und zwischen zwei Federzungen 104 hindurchverläuft.

Die der Nutflanke 106 zugewandte Stirnseite der Federzungen 104 des Filters 82 bildet einen der Laufbuchse 12 zugeordneten ersten axialen Anschlag. Die dem Filter 82 stirnseitig zugewandte Nutflanke 106 des Kolbens 20 bildet einen dem Kolben 20 zugeordneten zweiten axialen Anschlag. Bevor die den Kolben 20, die Laufbuchse 12 und das Filter 82 umfassende Vormontagebaugruppe in das Pumpengehäuse 16 eingesetzt ist, wirkt die Verliersicherung in der Weise, daß der Kolben 20 axial nur so weit aus der Laufbuchse 12 herausbewegt werden kann, bis der dem Kolben 20 zugeordnete Anschlag an dem der Laufbuchse 12 zugeordneten Anschlag zur Anlage kommt. Nach dem Einbau der Vormontagebaugruppe in das Pumpengehäuse 16 wird der Ausfahrhub des Kolbens 20 durch den Exzenter 56 begrenzt.

## Patentansprüche

1. Kolbenpumpe, mit einem zu einer hin- und hergehenden Hubbewegung antreibbaren Kolben, der axial verschieblich auf mindestens einem Teil seiner Länge in einer Laufbuchse aufgenommen ist, die in ein Pumpengehäuse eingesetzt ist, **dadurch gekennzeichnet, daß** die Kolbenpumpe (10) ein rohrförmiges Filter (82) aufweist, das den Kolben (20) umschließend an der Laufbuchse (12) angebracht ist, und daß das Filter (82) ein Führungselement (98) und ein Dichtelement (100) für den Kolben (20) aufweist.

2. Kolbenpumpe nach Anspruch 1, **dadurch gekennzeichnet, daß** das Führungselement (98) einstückig mit dem Filter (82) ist.

3. Kolbenpumpe nach Anspruch 2, **dadurch gekennzeichnet, daß** das Führungselement (98) und das Filter (82) einstückig aus demselben Kunststoff gespritzt sind.

4. Kolbenpumpe nach Anspruch 1, **dadurch gekennzeichnet, daß** das Dichtelement (100) einstückig mit dem Filter (82) ist.

5. Kolbenpumpe nach Anspruch 4, **dadurch gekennzeichnet, daß** das Dichtelement (100) an das Filter (82) angespritzt ist.

6. Kolbenpumpe nach Anspruch 1, **dadurch gekennzeichnet, daß** das Filter (82) eine Verliersicherung (104) aufweist, die den Kolben (20) in der Laufbuchse (12) hält.

## Claims

1. Piston pump, with a piston which is capable of being driven in a to-and-fro movement and which is received axially displaceably, on at least part of its length, in a liner which is inserted into a pump casing, **characterized in that** the piston pump (10) has a tubular filter (82) which, surrounding the piston (20), is mounted on the liner (12), and **in that** the filter (82) has a guide element (98) and a sealing element (100) for the piston (20).

2. Piston pump according to Claim 1, **characterized in that** the guide element (98) is in one piece with the filter (82).

3. Piston pump according to Claim 2, **characterized in that** the guide element (98) and the filter (82) are injection-moulded in one piece from the same plastic.

4. Piston pump according to Claim 1, **characterized in that** the sealing element (100) is in one piece with the filter (82).

5. Piston pump according to Claim 4, **characterized in that** the sealing element (100) is injection-moulded onto the filter (82).

6. Piston pump according to Claim 1, **characterized in that** the filter (82) has an anti-loss device (104) which holds the piston (20) in the liner (12).

## Revendications

1. Pompe à piston comportant un piston entraîné selon une course en va et vient en se déplaçant axialement, et logé sur au moins une partie de sa longueur dans une boite de glissement introduite dans un carter de pompe,
**caractérisée en ce que**
la pompe à piston (10) présente un filtre (82) tubulaire appliqué à la boîte de glissement (12) en entourant le piston (20) et
le filtre (82) présente un élément de guidage (98) et un élément d'étanchéité (100) pour le piston (20).

2. Pompe à piston selon la revendication 1,
**caractérisée en ce que**
l'élément de guidage (98) et le filtre (82) forment une seule pièce.

3. Pompe à piston selon la revendication 2,
**caractérisée en ce que**
l'élément de guidage (98) et le filtre (82) sont extrudés en une seule pièce dans la même matière synthétique.

4. Pompe à piston selon la revendication 1,
**caractérisée en ce que**
l'élément d'étanchéité (100) et le filtre (82) forment une seule pièce.

5. Pompe à piston selon la revendication 4,
**caractérisée en ce que**
l'élément d'étanchéité (100) est injecté sur le filtre (82).

6. Pompe à piston selon la revendication 1,
**caractérisée en ce que**
le filtre (82) présente une protection contre la perte (104) qui maintient le piston (20) dans la boîte de glissement (12).
